# EUROPEAN PATENT APPLICATION

(11) **EP 2 355 367 A1**
(43) Date of publication of application: **10.08.2011**
(21) Application number: 11425018.6
(22) Date of filing: 26.01.2011
(51) Int. Cl.: H04B 3/54

(54) **Power line communication for a photovoltaic system**

(30) Priority: 27.01.2010 IT RM20100026
(71) Applicant: Aepi Construzioni Elettromeccaniche S.r.L., 40025 Imola (BO) (IT)
(72) Inventor: Gasparri, Marco, 40026 Imola (BO) (IT)
(74) Representative: Santi, Filippo

(57) **Abstract**

The present invention relates to a signal transceiving system (1) in an energy production plant, in particular a photovoltaic plant comprising a plurality of photovoltaic panels, each one connected to an electric energy transmission line (2), characterized in that it comprises a plurality of peripheral units (40), each one provided with detecting means for detecting adjustable operation parameters of said photovoltaic panels, such as sensors (45), each one of said peripheral units (40) being capable of generating a detection data signal related to said operation parameters of said photovoltaic panels as detected by said means detecting, and at least one processing and controlling central unit (30), capable of processing said detection data signals generated by said peripheral units (40) and capable of generating signals for controlling said peripheral units (40), said central unit (30) and said peripheral units (40) being connected to said electric energy transmission line (2) and capable of receiving and transmitting said control signals and said detection data signals through said electric energy transmission line (2).

Present invention also concerns a method for transceiving signals.

## Description

The present invention relates to a signal transceiving system for an energy production system, particularly a photovoltaic system, and to a relevant transmission method.

More specifically, the invention concerns to system of the above kind, particularly studied and realised to permit transmission of signals to control a photovoltaic system of data relevant to operative parameters of the same, thus limiting harness costs and reducing complexity of the same.

Specification will be addressed in the following to a photovoltaic system, but it is well evident that the same must not be considered as limited to this specific use.

As it is well known, at present photovoltaic systems are always more employed both for domestic uses and for industrial uses, since they permit obtaining remarkable energy savings.

A generic photovoltaic system mainly comprises a plurality of photovoltaic panels, each one provided with a plurality of photovoltaic cell strings, and at least an inverter, to transform direct current, generated by photovoltaic panels, into alternate current. Generally speaking, systems can provide a centralized inverter, i.e. connected with all photovoltaic panel strings, or a plurality of inverters, not centralized, each inverter being connected to a photovoltaic panel string.

Last generation photovoltaic systems are always more efficient and with a high efficiency. Therefore, large photovoltaic systems are always more diffused, mainteinance and control of which involves higher costs. In fact, in order to detect a failure in a small system it can be sufficient a control device connected with inverter, since subsequent individuation and reparation of failure can be made quite quickly, individuation of the same failure in an implant provided with many panels can be require many time.

In view of the above, very sophisticated detection systems are always more diffused on the market, that can detect in real time operative physical parameters in different points of the system, e.g. besides in inverter, also in each single photovoltaic panel or cell, so that it permit a quick reparation or replacement of the damaged portion of the system.

Control systems are presently available on the market provided with a central unit, i.e. a server, accessible also by web, connected with sensors, such as meters, or protection devices (such as fusible) and like, which are connected to photovoltaic panels, to detect operative parameters of photovoltaic panels and/or inverters

However, known control systems have the noticeable drawback of requiring a high number of harness to connect control server and different detection units/sensors of operative parameters placed into the system connected to photovoltaic panels. Obviously, number of wired connections of the system is proportional both to dimension of photovoltaic system to be controlled and to details (i.e. number of elements to be controlled, e.g. single photovoltaic panel or single photovoltaic cell) of the system to be controlled.

It is well evident that reduction of wired connections permits obtaining economic advantages both when realising the system and for mainteinance of the same, reducing the number of interventions required, thus reducing complexity of the system.

In view of the above, it is an object of the present invention that of providing a control data transmission system of a photovoltaic system having a reduced number of wired connections.

Another object of the present invention is that of providing a communication system permitting simplifying maintenance interventions, thus permitting remarkable savings.

These and other results are obtained by a signal transceiving system according to the invention comprised of modules that can receive and transmit data each other by electric supply network by conveyed wave modulation.

It is therefore specific object of the present invention a signal transceiving system in an energy production plant, in particular a photovoltaic plant comprising a plurality of photovoltaic panels, each one connected to an electric energy transmission line, characterized in that it comprises a plurality of peripheral units, each one provided with detecting means for detecting adjustable operation parameters of said photovoltaic panels, such as sensors, each one of said peripheral units being capable of generating a detection data signal related to said operation parameters of said photovoltaic panels as detected by said means detecting, and at least one processing and controlling central unit, capable of processing said detection data signals generated by said peripheral units and capable of generating signals for controlling said peripheral units, said central unit and said peripheral units being connected to said electric energy transmission line and capable of receiving and transmitting said control signals and said detection data signals through said electric energy transmission line.

Always according to the invention, said central unit comprises a central communication interface, through which it is connected to said electric energy transmission line, capable to transmit said control signals and to receive said detection data signals through said electric energy transmission line, and each one of said peripheral units comprises a respective peripheral communication interface connected to said electric energy transmission line, capable to receive said control signal and to transmit said detection data signals through said electric energy transmission line.

Still according to the invention said central unit and said peripheral units are capable of modulating/demodulating said signal in conveyed waves.

Advantageously, according to the invention, said photovoltaic plant comprises at least one inverter and said system comprises means detecting connected with said inverter.

Furthermore, according to the invention, each one of said peripheral units comprises at least one digital input connector and at least one digital output connector.

Always, according to the invention, said central unit and said peripheral units communicate by a protocol, such as an Ethernet-or a Modbus type protocol.

Still, according to the invention, said control signals and said detection data signals are of digital type.

Advantageously, according to the invention, each one of said peripheral units is capable of adjusting the operation parameters of one or more photovoltaic panels connected thereto.

Preferably, according to the invention, said system can comprise a computer connected to say central unit, and a router/modem for routing and interfacing with external networks, such as telephone networks, for allowing the remote control of said system.

It is further object of the present invention a method for transceiving signals in an energy production plant in particular in a photovoltaic plant, comprising the following steps: (a) providing an electric energy transmission line; (b) providing a plurality of peripheral units, connected to said electric energy transmission line, each peripheral unit being provided with detecting means for detecting adjustable operation parameters of said photovoltaic panels, such as sensors; (c) generating a detection data signal related to said operation parameters of said photovoltaic panels as detected by said means detecting by one or more of said peripheral units; (d) providing at least one processing and controlling central unit connected to said electric energy transmission line, capable of processing said detection data signals generated by said peripheral units and of generating signals for controlling said peripheral units; (e) transmitting the detection data signal of a photovoltaic panel by the respective peripheral unit through said electric energy transmission line; (f) receiving and processing said detection data signals from said peripheral units through said electric energy transmission line by means of said central unit; (g) transmitting at least one signal for controlling said one or more of said peripheral units by means of said central unit through said electric energy transmission line; and (h) receiving and processing said control signal by means of one or more of said peripheral units from said electric energy transmission line.

Always, according to the invention, at least one or in each one of said steps (e), (f), (g) and/or (h) the reception/transmission occurs by conveyed waves demodulation/modulation.

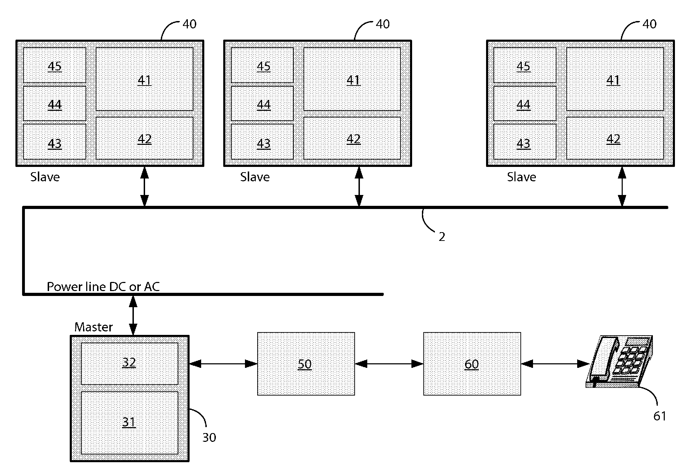

The present invention will be now described in the following for illustrative and not limitative purposes, according to its preferred embodiments, with particular reference to the figure of the enclosed drawing showing a block diagram of the data control transmission system of a photovoltaic system according to the present invention.

Making reference to the enclosed figure, it is possible observing a block diagram of a transceiving system for control signals or for detection data (generically indicated by reference number 1), according to the present invention, for a photovoltaic system (not shown in the figures).

It is observed a transceiving system 1 comprising a line for transmitting electric power 2, through which flows Direct Current (DC) or Alternate Current (AC) generated by photovoltaic system, a processing and control central unit 30, connected with said electric power transmission line 2, and a plurality of peripheral units 40, connected as well to said electric power transmission line 2.

Central unit 30 is connected to the electric power transmission line 2 by a central communication interface 31, such as a microprocessor, that can process data arriving from, and can generate control signals for said peripheral units 40. Said central communication interface 32 can transmit and receive conveyed wave modulated signals passing through said electric power transmission line 2.

Each peripheral unit 40 is connected to the electric power transmission line 2 by a peripheral communication unit 42, that can transmit and receive conveyed wave modulated signals. Furthermore, each peripheral unit 40 includes processing means 41, connected with a plurality of analogical sensors 45, suitable to detect operative parameters of system photovoltaic panels, or inverter(s), atmospheric date, and like. Said operative parameters are then processed by said peripheral processing means 41, to be then transmitted as digital signals, from said peripheral communication interface 42 through electric power transmission line 2, after having been modulated by conveyed waves, as it will be better described in the following.

Each peripheral unit 40 further comprises digital inlet and outlet connectors 44 and 43. Inlets are used to monitor condition of outer devices (i.e. disconnector, SPD discharger, ecc.), while outlets are used to force status of outer devices (i.e. inverter, ecc.).

Said central and peripheral communication units 32, 42 can transmit and receive data digital signals through said electric power transmission line 2, overlapping them to the electric power supply, thus eliminating connections between system 1 parts, using electric power transmission line 2 both for transporting electric power and for transmitting signals.

Communication between central unit 30 and peripheral unit 40 occurs, in the transmission system 1, by conveyed wave technology, by which it is possible juxtaposing to electric power transportation (low frequency 50 Hz alternate and direct current), a signal at a higher frequency (carrier) modulated by the information to be transmitted. Separation of the two current types is carried out thanks to filtering and separation of frequency intervals employed, and it is carried out by said central communication interface 32 and said communication peripheral interfaces 42.

Furthermore, in the inventive transmission system 1, central unit 30 can modulate, by its central communication interface 32, controls to be sent to processing peripheral unit 41 and to de-modulate data arriving from analogical sensors 45 of photovoltaic panels.

Instead, each one of the peripheral units 40 of each photovoltaic panel, always by its communication peripheral interface 42, modulates data acquired by analogical sensors 45 and de-modulate controls arriving from said central processing and control unit 30 generated by said processing means 31.

Communication between central unit 30 and peripheral units 40 for transmitting control digital signals or detection data can occur by a suitable communication protocol (of the client-server type), e.g. of the Ethernet or Modbus type. In this case, central unit 30, when transmitting a digital control signal for a peripheral unit 40, provides a suitable code assigned to the same. When signal is de-modulated during reception by peripheral units 40, indicates to the peripheral unit said code to execute the control. Further, each peripheral unit 40, when transmitting a digital signal of detection data includes its own code within the same signal. When the signal is de-modulated by the receiving central unit 30, the latter can attribute said detection data to the transmitting peripheral unit 40, thus permitting monitoring photovoltaic panel assigned to the same.

Transmission system 1 permits controlling remote control of photovoltaic system. In fact, figure shows that a processor 50 is connected to said central unit 30; furthermore, said processor 50 is connected to a router/modem 60 for routing and interface with outer networks, for example phone networks, permitting controlling system 1 also by a simple phone apparatus 61.

Thus, it is even possible controlling a large and complex photovoltaic system, being it possible detecting failure of different parts, permitting a quick individuation of the same, thus saving time and costs, and monitoring in real time performances for production of power, and an optimised remote managing of the same system, thanks to the bidirectional communication among the parts of the system 1, without adding wires or cables besides electric power transmission line 2.

An advantage that must be stressed out is that the transmission system according to the present invention is not characterised by noise due to climatic conditions, since information are routed along cables and thus they are not influenced by climate.

Present invention has been described for illustrative, but not limitative, purposes, according to its preferred embodiments, but it is to be understood that variations and/or modifications can be adopted by those skilled in the art without departing from the scope as defined by the enclosed claims.

## Claims

1. Signal transceiving system (1) in an energy production plant, in particular a photovoltaic plant comprising a plurality of photovoltaic panels, each one connected to an electric energy transmission line (2), **characterized in that** it comprises a plurality of peripheral units (40), each one provided with detecting means for detecting adjustable operation parameters of said photovoltaic panels, such as sensors (45), each one of said peripheral units (40) being capable of generating a detection data signal related to said operation parameters of said photovoltaic panels as detected by said means detecting, and at least one processing and controlling central unit (30), capable of processing said detection data signals generated by said peripheral units (40) and capable of generating signals for controlling said peripheral units (40), said central unit (30) and said peripheral units (40) being connected to said electric energy transmission line (2) and capable of receiving and transmitting said control signals and said detection data signals through said electric energy transmission line (2).

2. Transmission system (1) according to claim 1, **characterized in that**
said central unit (30) comprises a central communication interface (32), through which it is connected to said electric energy transmission line (2), capable to transmit said control signals and to receive said detection data signals through said electric energy transmission line (2), and
each one of said peripheral units (40) comprises a respective peripheral communication interface (42) connected to said electric energy transmission line (2), capable to receive said control signal and to transmit said detection data signals through said electric energy transmission line (2).

3. Transmission system (1) according to anyone of the preceding claims, **characterized in that** said central unit (30) and said peripheral units (40) are capable of modulating/demodulating said signal in conveyed waves.

4. Transmission system (1) according to anyone of the preceding claims, **characterized in that** said photovoltaic plant comprises at least one inverter and said system (1) comprises means detecting connected with said inverter.

5. Transmission system (1) according to anyone of the preceding claims, **characterized in that** each one of said peripheral units comprises at least one digital input connector (44) and at least one digital output connector (43).

6. Transmission system (1) according to anyone of the preceding claims, **characterized in that** said central unit (30) and said peripheral units (40) communicate by a protocol, such as an Ethernet-or a Modbus type protocol.

7. Transmission system (1) according to anyone of the preceding claims **characterized in that** said control signals and said detection data signals are of digital type.

8. Transmission system (1) according to anyone of the preceding claims, **characterized in that** each one of said peripheral units (40) is capable of adjusting the operation parameters of one or more photovoltaic panels connected thereto.

9. Transmission system (1) according to anyone of the preceding claims, **characterized in that** it comprises a computer (50) connected to said central unit (30), and a router/modem (60) for routing and interfacing with external networks, such as telephone networks, for allowing the remote control of said system (1).

10. Method for transceiving signals in an energy production plant in particular in a photovoltaic plant, comprising the following steps:
(a) providing an electric energy transmission line (2);
(b) providing a plurality of peripheral units (40), connected to said electric energy transmission line (2), each peripheral unit (40) being provided with detecting means for detecting adjustable operation parameters of said photovoltaic panels, such as sensors (45);
(c) generating a detection data signal related to said operation parameters of said photovoltaic panels as detected by said means detecting by one or more of said peripheral units (40);
(d) providing at least one processing and controlling central unit (30) connected to said electric energy transmission line (2), capable of processing said detection data signals generated by said peripheral units (40) and of generating signals for controlling said peripheral units (40);
(e) transmitting the detection data signal of a photovoltaic panel by the respective peripheral unit (40) through said electric energy transmission line (2);
(f) receiving and processing said detection data signals from said peripheral units (40) through said electric energy transmission line (2) by means of said central unit (30);
(g) transmitting at least one signal for controlling said one or more of said peripheral units (40) by means of said central unit (30) through said electric energy transmission line (2); and
(h) receiving and processing said control signal by means of one or more of said peripheral units (40) from said electric energy transmission line (2).

11. Method according to claim 10, **characterized in that** in at least one or in each one of said steps (e), (f), (g) and/or (h) the reception/transmission occurs by conveyed waves demodulation/modulation.
